# EUROPEAN PATENT SPECIFICATION

(11) **EP 2 597 384 B1**
(45) Date of publication and mention of the grant of the patent: **02.09.2020**
(21) Application number: 12188006.6
(22) Date of filing: 10.10.2012
(51) Int. Cl.: F24F 1/14, F24F 1/38

(54) **Outdoor unit for air conditioner**
Außenraumeinheit für Klimaanlage
Unité extérieure pour climatiseur

(30) Priority: 14.10.2011 KR 20110105400
(43) Date of publication of application: 29.05.2013
(73) Proprietor: LG Electronics, Seoul, 150-721 (KR)
(72) Inventor: Donghwi, Kim, 641-110 Kyungsangnam-do (KR); Seokho, Choi, 641-110 Kyungsangnam-do (KR); Kakjoong, Kim, 641-110 Kyungsangnam-do (KR); Yongcheol, Sa, 641-110 Kyungsangnam-do (KR); Siyoung, Oh, 641-110 Kyungsangnam-do (KR)
(74) Representative: Vossius & Partner Patentanwälte Rechtsanwälte mbB

(56) References cited:
- EP-A2- 1 850 074
- WO-A1-2007/040217
- JP-A- 2008 202 869
- KR-A- 20100 084 402

## Description

The present invention relates to an outdoor unit for an air conditioner, and more particularly to an outdoor unit for an air conditioner which improves heat exchange performance.

In general, an air conditioner cools or heats an indoor space using a refrigeration cycle including compressors, an outdoor heat exchanger, an expansion valve and an indoor heat exchanger. That is, the air conditioner may include a cooling device to cool an indoor space and a heating device to heat the indoor space. Further, the air conditioner may have both functions of cooling and heating an indoor space.

Air conditioners are generally divided into a window type and a separate type or split type. While the window type and separate type air conditioners have the same functions, the window type air conditioner has a cooling function and a heat radiating function which are integrated, and is directly installed on a wall or a window of a house by perforating the wall or hanging a device on the window, and the separate type air conditioner is configured such that an indoor unit provided with an indoor heat exchanger is installed indoors, an outdoor unit provided with compressors and an outdoor heat exchanger is installed outdoors and the indoor unit and the outdoor unit separated from each other are connected by a refrigerant pipe.

The outdoor unit achieves heat exchange between outdoor air and a refrigerant through the outdoor heat exchanger, and is provided with an air blowing device, such as a fan to generate outdoor air flow to achieve effective heat exchange between the outdoor air and the refrigerant.

KR 2010 0084402 relates to an air conditioner comprising a base pan, an outdoor unit, and a fin-tube type outdoor heat exchanger. The outdoor unit is connected to the base pan, an air inlet is formed on three sides of the outdoor unit, a discharge unit is formed on the top of the outdoor unit. The outdoor heat exchanger is bent to face the inlet and an end plate coupled to the base pan and the outdoor unit is arranged on both ends of the outdoor heat exchanger. A base connecting member coupled to the base is bent in the direction of covering a part of the fins. The document discloses an outdoor unit for an air conditioner according to the preamble of claim 1.

An object of the present invention is to provide an outdoor unit for an air conditioner which improves heat exchange performance.

Another object of the present invention is to provide an outdoor unit for an air conditioner which increases the total volume of air flowing in the outdoor unit to improve heat exchange performance.

The objects of the present invention are not limited to the above-mentioned objects and other objects that have not been mentioned above will become evident to those skilled in the art from the following description.

To achieve the above objects, there is provided an outdoor unit according to claim 1.

The above and other objects, features and other advantages of the present invention will be more clearly understood from the following detailed description taken in conjunction with the accompanying drawings, in which:
FIG. 1 is a schematic view of an air conditioner in accordance with the present invention;
FIG. 2 is a circuit diagram of an outdoor unit of the air conditioner of FIG. 1;
FIG. 3 is a perspective view of an outdoor unit in accordance with one embodiment of the present invention;
FIG. 4 is an exploded perspective view of the outdoor unit of FIG. 3;
FIG. 5 is a partial front view of the outdoor unit of FIG. 3;
FIG. 6 is a horizontal sectional view of the outdoor unit of FIG. 3;
FIG. 7 is a view illustrating air flow in the outdoor unit of FIG. 3;
FIG. 8 is a front view of an outdoor unit in accordance with another embodiment of the present invention;
FIG. 9 is a partial front view of the outdoor unit of FIG. 8; and
FIG. 10 is a horizontal sectional view of the outdoor unit of FIG. 8.

The advantages and features of the present invention, and the way of attaining them, will become apparent with reference to embodiments described below in conjunction with the accompanying drawings. Reference will now be made in detail to the preferred embodiments of the present invention, examples of which are illustrated in the accompanying drawings. Wherever possible, the same reference numbers will be used throughout the drawings to refer to the same or like parts.

Hereinafter, embodiments of the present invention will be described with reference to the drawings to illustrate an outdoor unit for an air conditioner in accordance with the embodiments of the present invention.

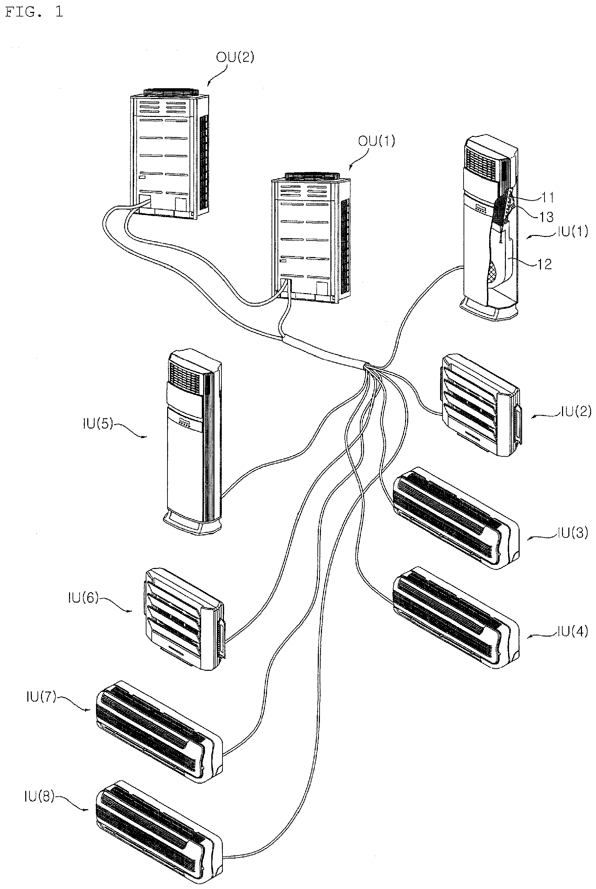

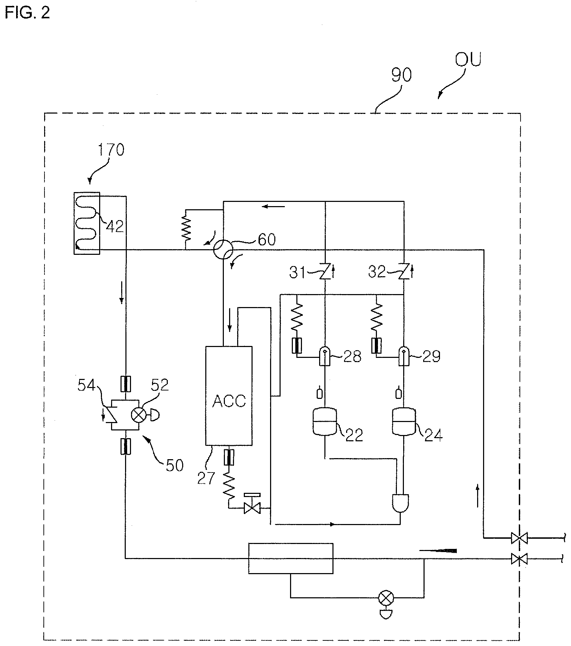

FIG. 1 is a schematic view of an air conditioner in accordance with the present invention, and FIG. 2 is a circuit diagram of an outdoor unit of the air conditioner of FIG. 1.

The air conditioner in accordance with the present invention, as shown in FIG. 1, is a heat pump type multi air conditioner which includes a plurality of indoor units IU and a plurality of outdoor units OU connected to the plurality of indoor units IU, and selectively executes cooling and heating.

The plural indoor units IU and the plural outdoor units OU are connected in parallel by liquid pipes through which a refrigerant in a liquid state passes and gas pipes through which the refrigerant in a gas state passes.

Each of the plural indoor units IU includes an indoor heat exchanger 11 to cool or heat indoor air while executing heat exchange between the refrigerant and the indoor air, an indoor air blower 12 to suck the indoor air into the indoor unit IU and then to discharge the indoor air, having exchanged heat with the refrigerant in the indoor heat exchanger 11, to the outside of the indoor unit IU, and an indoor expansion device 13 to expand the refrigerant flowing toward the indoor heat exchanger 11. The indoor expansion device 13 includes an electronic expansion valve, such as an LEV or EEV, to adjust expansion of the refrigerant.

The plural outdoor units OU have the same structure, and hereinafter, one outdoor unit OU is described for convenience of description.

One outdoor unit OU includes compressors 22 and 24, an outdoor heat exchanger 170, an outdoor air blower (not shown), an outdoor expansion device 50, and a cooling/heating switching valve 60.

The compressors 22 and 24 serve to compress the refrigerant, and here, plural compressors 22 and 24 are connected in parallel by refrigerant channels. The compressors 22 and 24 include a capacity variable compressor 22, such as an inverter compressor, and a constant speed compressor 24. The suction sides of the compressors 22 and 24 are connected to one common accumulator 27, and oil separators 28 and 29 and check valves 31 and 32 are respectively connected to the discharge sides of the compressors 22 and 24.

The outdoor heat exchanger 170 is a fin-tube type heat exchanger, and functions as a condenser during a cooling operation and as an evaporator during a heating operation and a defrosting operation. The outdoor heat exchanger 170 is provided with a refrigerant channel 42 in which the refrigerant flows.

The outdoor expansion device 50 does not expand the refrigerant when the refrigerant having passed through the outdoor heat exchanger 170 passes through the outdoor expansion device 50 during the cooling operation, and expands the refrigerant when the refrigerant passes through the outdoor expansion device 50 during the heating operation. The outdoor expansion device 50 is installed between the refrigerant channel 42 of the outdoor heat exchanger 170 and the indoor expansion device 13, and includes an outdoor expansion valve 52 and a check valve 54 which are connected in parallel.

The cooling/heating switching valve 60 enables the refrigerant compressed by the compressors 22 and 24 to flow to the outdoor heat exchanger 170 and the refrigerant having passed through the indoor heat exchanger 11 to flow to the compressors 22 and 24 during the cooling operation, and enables the refrigerant compressed by the compressors 22 and 24 to flow to the indoor heat exchanger 11 and the refrigerant having passed through the outdoor heat exchanger 170 to flow to the compressors 22 and 24 during the heating operation. The cooling/heating switching valve 60 is connected to the compressors 22 and 24, the outdoor heat exchanger 170, the indoor heat exchanger 11 and the accumulator 27.

The outdoor unit OU is provided with suction holes through which outdoor air is sucked into an outdoor unit case 90 forming the external appearance of the outdoor unit OU and a discharge hole through which air having exchanged heat with the outdoor heat exchanger 170 within the outdoor unit case 90 is discharged to the outside. The compressors 22 and 24, the accumulator 27, the oil separators 28 and 29, the check valves 31 and 32, the outdoor heat exchanger 170, the outdoor expansion device 50 and the cooling/heating switching valve 60 are installed within the outdoor unit case 90.

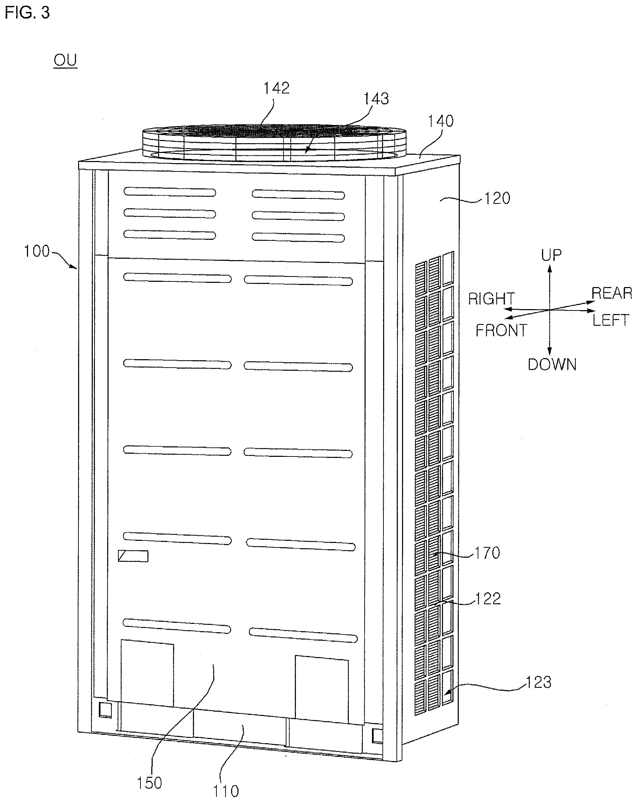

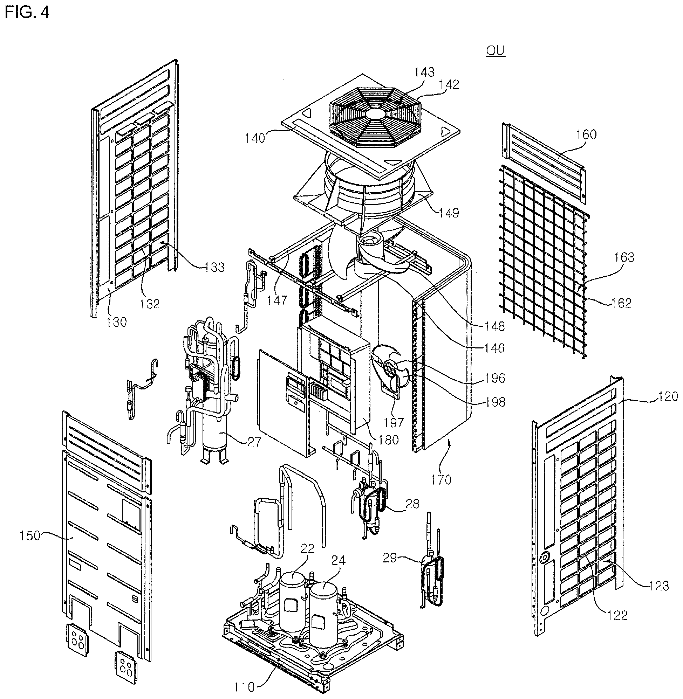

FIG. 3 is a perspective view of an outdoor unit in accordance with one embodiment of the present invention, and FIG. 4 is an exploded perspective view of the outdoor unit of FIG. 3.

The outdoor unit OU of the air conditioner in accordance with this embodiment includes: an outdoor unit base 110 forming the bottom surface of the outdoor unit OU; an outdoor unit main body 100 connected to the outdoor unit base 110 and provided with suction holes 123, 133 and 163 formed on the circumferential surfaces thereof to suck air into the outdoor unit main body 100 therethrough and a discharge hole 143 formed on the top surface thereof; the outdoor heat exchanger 170 disposed within the outdoor unit main body 100 having sections facing towards each of the suction holes 123, 133 and 163; a discharge fan 148 provided around the discharge hole 143 of the outdoor unit main body 100 to generate air flow in the vertical direction; and a suction fan 198 provided in the lower portion of the outdoor unit main body 100 to generate air flow in the horizontal direction.

In this embodiment, the upward and downward directions mean the vertical direction, i.e., the direction of gravity, and the forward and backward directions and the rightward and leftward directions mean the horizontal directions perpendicular to the upward and downward directions.

The outdoor unit case 90 includes the outdoor unit base 110 and the outdoor unit main body 100, and forms the external appearance of the outdoor unit OU. The outdoor unit base 110 forms the external appearance of the bottom surface of the outdoor unit case 90, and the compressors 22 and 24, the oil separators 28 and 29, the accumulator 27 and the outdoor heat exchanger 170 are installed on top of the outdoor unit base 110.

The outdoor unit main body 100 is connected to the outdoor unit base 110. The outdoor unit main body 100 has a rectangular parallelepipedal shape, the bottom surface of which is opened. The suction holes 123, 133 and 163 through which air is sucked into the outdoor unit main body 100 are formed on the circumferential surfaces of the outdoor unit main body 100. The discharge hole 143 is formed on the top surface of the outdoor unit main body 100. Preferably, the suction holes 123, 133 and 163 are formed on three surfaces, i.e., the rear, the left and the right surfaces, from among the circumferential surfaces of the outdoor unit main body 100. In this embodiment, the suction holes 123, 133 and 163 include left suction holes 123, right suction holes 133 and rear suction holes 163.

The outdoor unit main body 100 includes a left panel 120 forming the left surface of the outdoor unit case 90, a right panel 130 forming the right surface of the outdoor unit case 90, a top panel 140 forming the top surface of the outdoor unit case 90, a front panel 150 forming the front surface of the outdoor unit case 90, and a rear panel 160 forming the rear surface of the outdoor unit case 90.

The left panel 120 forms the external appearance of the left surface of the outdoor unit OU, and is connected to the left portion of the outdoor unit base 110. The left panel 120 is provided with a left grill 122 formed thereon so as to suck outdoor air into the outdoor unit main body 100. The left grill 122 forms the left suction holes 123 through which outdoor air is sucked into the outdoor unit main body 100 from the left side.

The right panel 130 forms the external appearance of the right surface of the outdoor unit OU, and is connected to the right portion of the outdoor unit base 110. The right panel 130 is provided with a right grill 132 formed thereon so as to suck outdoor air into the outdoor unit main body 100. The right grill 132 forms the right suction holes 133 through which outdoor air is sucked into the outdoor unit main body 100 from the right side.

The top panel 140 forms the external appearance of the top surface of the outdoor unit OU, is connected to the upper portions of the left panel 120 and the right panel 130, and is provided with the discharge hole 143. The top panel 140 is provided with a discharge grill 142 located above the discharge hole 143.

The front panel 150 forms the external appearance of the front surface of the outdoor unit OU, and is disposed in front of a space surrounded by the outdoor unit base 110, the left panel 120, the right panel 130 and the top panel 140.

The rear panel 160 forms part of the external appearance of the rear surface of the outdoor unit OU, and is disposed in the rear of the space surrounded by the left panel 120, the right panel 130 and the top panel 140. The rear panel 160 is provided with a rear grill 162 so as to suck outdoor air into the outdoor unit main body 100. The rear grill 162 forms the rear suction holes 163 through which outdoor air is sucked into the outdoor unit main body 100 from the rear.

The outdoor heat exchanger 170 is disposed within the outdoor unit main body 100 and includes a plurality of sections facing towards each of the suction holes 123, 133 and 163. In this embodiment, the suction holes 123, 133 and 163 include the left suction holes 123, the right suction holes 133 and the rear suction holes 163, and the outdoor heat exchanger 170 has three horizontal sections forming ⊃ shape. The outdoor heat exchanger 170 having three sections is configured to surround the compressors 22 and 24, the oil separators 28 and 29 and the accumulator 27 installed on the top surface of the outdoor unit base 110.

From among the three sections of the outdoor heat exchanger 170, the left section has one of its major surfaces facing towards the left suction holes 123 formed on the left panel 120, the right section has one of its major surfaces facing towards the right suction holes 133 formed on the right panel 130, and the rear section has one of its major surfaces facing towards the rear suction holes 163 formed on the rear panel 160.

The discharge fan 148 is provided at the discharge hole 143 of the outdoor unit main body 100 and generates air flow in the vertical direction. The discharge fan 148 is disposed below the top panel 140 so as to correspond to the discharge hole 143. The discharge fan 148 is supported by discharge brackets 147 connected to the front panel 150 and the rear panel 160.

The discharge fan 148 is rotated by a discharge motor 146, and the discharge motor 146 is installed on the discharge brackets 147. A shroud 149 forming a channel is provided around the discharge fan 148. The shroud 149 is connected to the front panel 150 and the rear panel 160 and is disposed below the top panel 140.

The discharge fan 148 generates outdoor air flow to achieve heat exchange between the outdoor air and the refrigerant within the outdoor heat exchanger 170. Preferably, the discharge fan 148 is an axial fan having an axis formed in the vertical direction (the upward and downward directions) to discharge the outdoor air within the outdoor unit main body 100 to the outside. The discharge fan 148 discharges outdoor air sucked through the suction holes 123, 133 and 163 upward.

The suction fan 198 is provided in the lower portion of the outdoor unit main body 100, and generates air flow in the horizontal direction. The suction fan 198 is disposed on the outdoor unit base 110. The suction fan 198 is supported by a suction bracket 197 connected to the top surface of the outdoor unit base 110. The suction fan 198 is rotated by a suction motor 196, and the suction motor 196 is installed on the suction bracket 197.

The suction fan 198 generates outdoor air flow together with the discharge fan 148 to achieve heat exchange between the outdoor air and the refrigerant within the outdoor heat exchanger 170. Preferably, the suction fan 198 is an axial fan having an axis formed in the horizontal direction to suck outdoor air from the outside of the outdoor unit main body 100 into the outdoor unit main body 100. Preferably, the suction fan 198 has the axis formed in the forward and backward directions and thus generates air flow in the forward and backward directions.

A controller 180 controls the compressors 22 and 24, the outdoor expansion device 50, the cooling/heating switching valve 60, the discharge motor 146, and the suction motor 196 according to required cooling/heating performance.

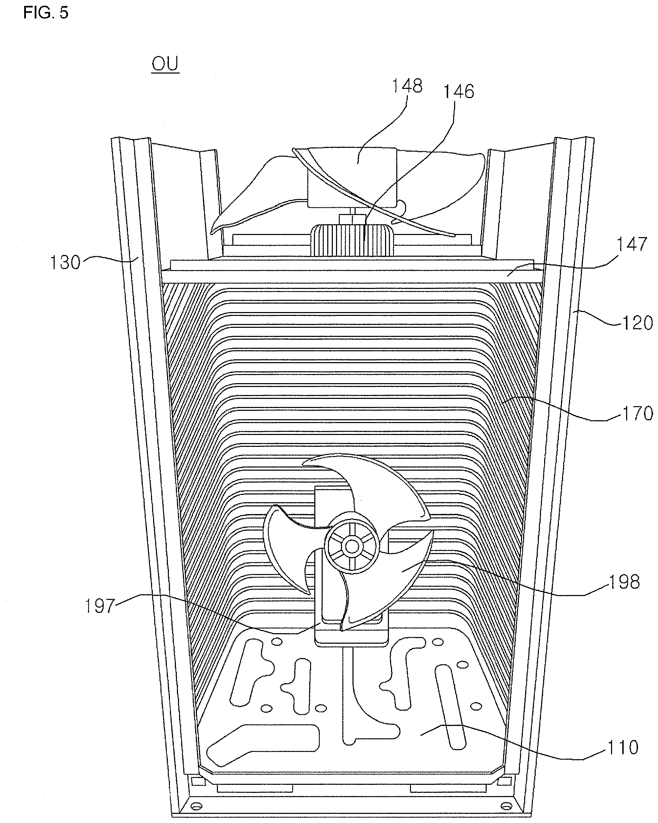

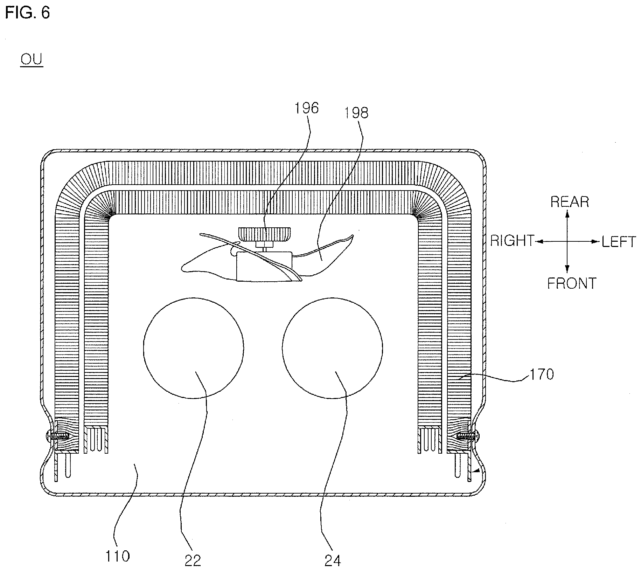

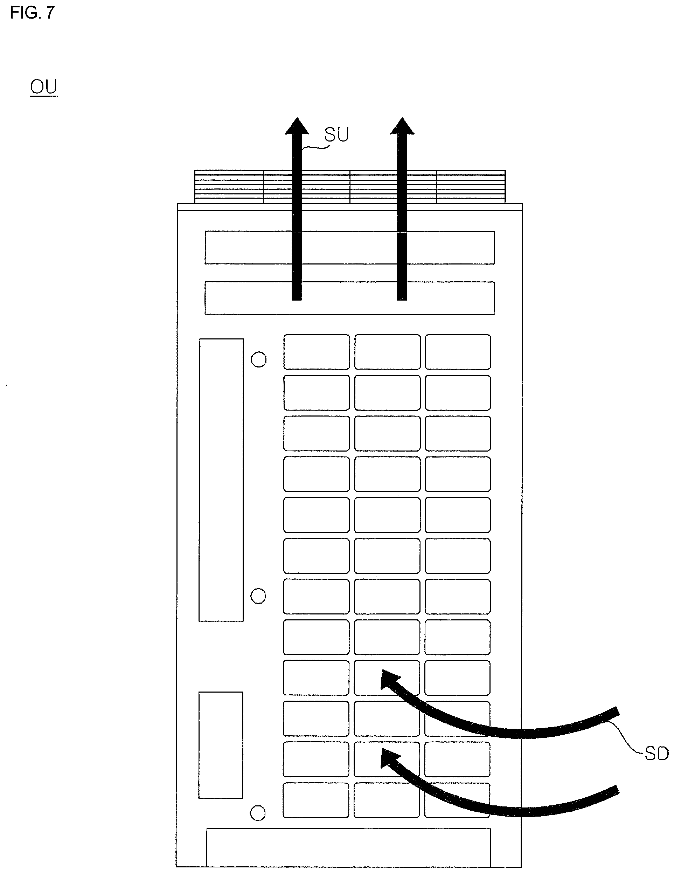

FIG. 5 is a partial front view of the outdoor unit of FIG. 3, FIG. 6 is a horizontal sectional view of the outdoor unit of FIG. 3, and FIG. 7 is a view illustrating air flow in the outdoor unit of FIG. 3.

The suction fan 198 of the outdoor unit OU in accordance with the embodiment of the present invention is disposed close to the outdoor heat exchanger 170 facing the rear section from among the three sections of the outdoor heat exchanger 170. The suction fan 198 is disposed in the rear portion of the outdoor unit OU to be close to the rear section of the outdoor heat exchanger 170. The suction fan 198 is provided between the rear section of the outdoor heat exchanger 170 and the compressors 22 and 24. In other words, the rear section of the outdoor heat exchanger 170 is disposed more upstream than the suction fan 198 in the air flow path. The suction bracket 197 supporting the suction fan 198 is connected to the rear portion of the outdoor unit base 110.

The suction fan 198 causes outdoor air to be sucked into the outdoor unit main body 100 through the rear suction holes 163 and then to flow toward the compressors 22 and 24 via the rear section of the outdoor heat exchanger 170. The suction fan 198 generates outdoor air flow from the rear to the front.

Preferably, the suction fan 198 forms an air velocity similar to the air velocity of the discharge fan 148. With reference to FIG. 7, the velocity of upstream sucked air SD made by the suction fan 198 is preferably similar to the velocity of downstream discharged air SU made by the discharge fan 148. The controller 180 controls the suction motor 196 and the discharge motor 146 and thus adjusts the rotational velocity of the suction fan 198 and the rotational velocity of the discharge fan 148 so that the velocity of the upstream sucked air SD is similar to the velocity of the downstream discharged air SU.

If the velocity of the downstream discharged air SU passing through the upper portion of the outdoor heat exchanger 170 and the velocity of the upstream sucked air SD passing through the lower portion of the outdoor heat exchanger 170 are similar to each other, the total volume of air passing through the outdoor heat exchanger 170 is increased and heat exchange performance of the outdoor heat exchanger 170 is improved.

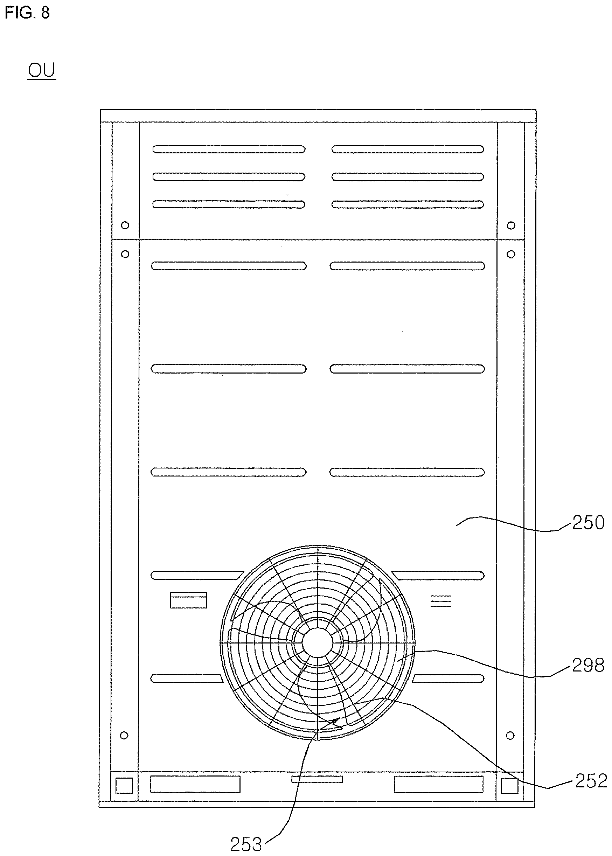

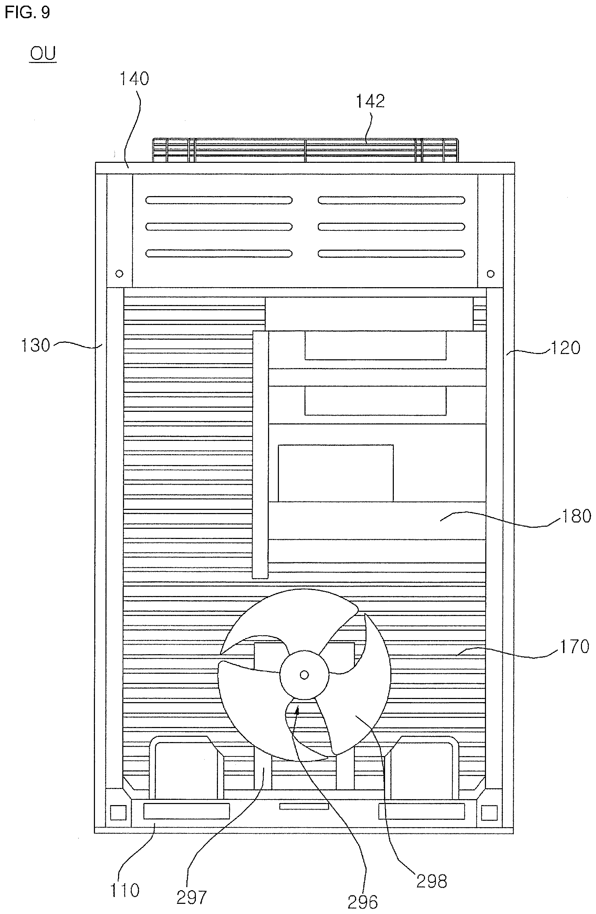

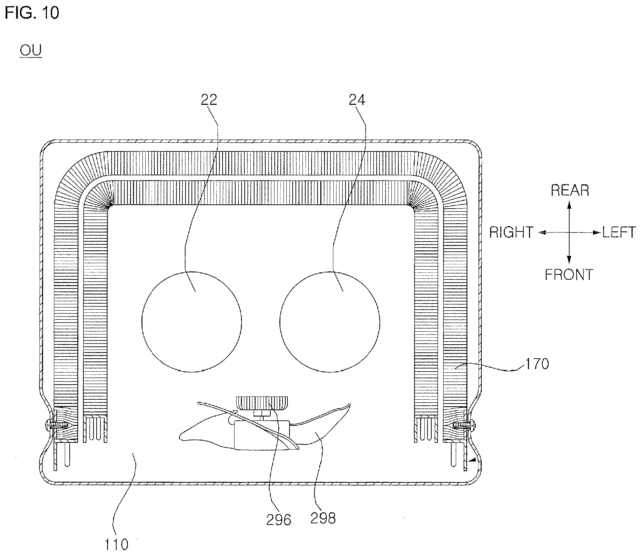

FIG. 8 is a front view of an outdoor unit in accordance with another embodiment of the present invention, FIG. 9 is a partial front view of the outdoor unit of FIG. 8, and FIG. 10 is a horizontal sectional view of the outdoor unit of FIG. 8.

A suction fan 298 of an outdoor unit OU in accordance with this embodiment of the present invention is disposed in the front portion of the outdoor unit main body 100 facing the rear section from among the three sections of the outdoor heat exchanger 170. The suction fan 208 is disposed in the front portion of the outdoor unit OU to be close to a front panel 250 of the outdoor unit main body 100. The suction fan 298 is provided between the front panel 250 forming the front surface of the outdoor unit main body 100 and the compressors 22 and 24. Further, the rear section of the outdoor heat exchanger 170 is disposed in the rear portion of the outdoor unit OU to be close to the rear panel 160. In other words, the compressors 22 and 24 are positioned more downstream than the suction fan in the air flow path, while the rear section of the outdoor heat exchanger 170 is disposed further downstream from the compressors 22 and 24. The suction fan 298 is provided below the controller 180. A suction bracket 297 supporting the suction fan 298 is connected to the front portion of the outdoor unit base 110.

A front suction hole 253 corresponding to the suction fan 298 is formed on the front panel 250 of the outdoor unit main body 100. The front panel 250 is provided with a front grill 252 to suck outdoor air into the outdoor unit main body 100. The front grill 252 is provided in the front suction hole 253 to suck outdoor air from the front therethrough.

The suction fan 298 causes outdoor air to be sucked into the outdoor unit main body 100 through the front suction hole 253 and then to flow toward the compressors 22 and 24. The suction fan 298 generates outdoor air flow from the front to the rear. Preferably, the suction fan 298 forms an air velocity similar to the air velocity of the discharge fan 148.

As apparent from the above description, an outdoor unit for an air conditioner in accordance with one embodiment of the present invention has at least one of the following effects.

First, the outdoor unit is provided with a discharge fan generating air flow in the vertical direction and a suction fan generating air flow in the horizontal direction, thereby increasing the total volume of air passing through an outdoor heat exchanger.

Second, the outdoor unit allows the velocity of air passing through the upper portion of the outdoor heat exchanger and the velocity of air passing through the lower portion of the outdoor heat exchanger to be similar to each other, thereby solving unbalance in refrigerant distribution.

Third, the outdoor unit increases the total volume of air and solves unbalance in refrigerant distribution, thereby improving heat exchange performance.

Effects of the present invention are not limited to the above-stated effects, and those skilled in the art will understand other effects, which are not stated above, from the accompanying claims.

Although the preferred embodiments of the present invention have been disclosed for illustrative purposes, those skilled in the art will appreciate that various modifications, additions and substitutions are possible, without departing from the scope of the invention as defined by the accompanying claims.

## Claims

1. An outdoor unit for an air conditioner comprising:
a base (110) forming the bottom surface of the outdoor unit;
a main body (100) connected to the base and having a plurality of suction holes (123, 133, 163) for allowing air thereinto and a discharge hole (143) for discharging air therefrom;
a heat exchanger (170) disposed within the main body and installed on top of the base, adapted for executing heat exchange with the air flowing through the outdoor unit;
a discharge fan (148) provided at the discharge hole side of the main body and being adapted to generate downstream air flow out of the outdoor unit; and
a compressor (22, 24) installed on top of the base for compressing a refrigerant,
the main body having a rectangular parallelepiped shape and the plurality of suction holes are formed on three lateral sides (120, 130, 160) of the main body respectively,
wherein the discharge hole is formed on the top surface (140) of the main body,
wherein the heat exchanger (170) includes three sections facing towards the plurality of suction holes,
**characterized in that** a suction fan (198) is provided at the suction hole side of the main body and is adapted to generate upstream air flow into the outdoor unit;
wherein the suction fan (198) is provided in the lower portion of the main body and disposed on top of the base,
wherein the suction fan (198) is provided between a rear section of the three sections of the heat exchanger and the compressor (22, 24).

2. The outdoor unit according to claim 1, further comprising a controller (180) adapted to adjust the rotational velocities of the suction fan and the discharge fan so that the upstream air flow and the downstream air flow have different velocities.

3. The outdoor unit according to claim 1, further comprising a controller (180) adapted to adjust the rotational velocities of the suction fan and the discharge fan so that the upstream air flow and the downstream air flow have identical velocities

4. The outdoor unit according to any one of claims 1 to 3, wherein the suction fan (198) is adapted to generate the upstream air flow in the horizontal direction, and
wherein the discharge fan (148) is adapted to generate the downstream air flow in the vertical direction.

5. The outdoor unit according to claims 1 to 4,
wherein the middle (160) of three sections of the heat exchanger is disposed more upstream than the suction fan in the air flow path.

6. The outdoor unit according to claims 1 to 5, wherein the compressor (22, 24) is positioned more downstream than the suction fan in the air flow path.

## Patentansprüche

1. Außeneinheit für eine Klimaanlage, die aufweist:
einen Träger (110), die die Bodenfläche der Außeneinheit bildet;
einen Hauptkörper (100), der mit dem Träger verbunden ist und mehrere Sauglöcher (123, 133, 163) zum Einlassen von Luft und ein Auslassloch (143) zum Auslassen von Luft aufweist;
einen im Hauptkörper angeordneten und auf dem Träger montierten Wärmetauscher (170), der geeignet ist, einen Wärmetausch mit der durch die Außeneinheit strömenden Luft durchzuführen;
ein Auslassgebläse (148), das auf der Auslasslochseite des Hauptkörpers angeordnet und geeignet ist, einen nach unten strömenden Luftstrom aus der Außeneinheit heraus zu erzeugen; und
einen Verdichter (22, 24), der auf dem Träger montiert ist, um ein Kühlmittel zu verdichten,
wobei der Hauptkörper eine rechteckige Parallelepipedform hat und die mehreren Sauglöcher jeweils auf drei lateralen Seiten (120, 130, 160) des Hauptkörpers gebildet sind,
wobei das Auslassloch auf der oberen Fläche (140) des Hauptkörpers gebildet ist,
wobei der Wärmetauscher (170) drei Bereiche aufweist, die zu den mehreren Sauglöchern weisen,
**dadurch gekennzeichnet, dass** ein Sauggebläse (198) auf der Sauglochseite des Hauptkörpers angeordnet und geeignet ist, einen nach oben strömenden Luftstrom in die Außeneinheit zu erzeugen;
wobei das Sauggebläse (198) im unteren Abschnitt des Hauptkörpers vorgesehen und auf dem Träger angeordnet ist,
wobei das Sauggebläse (198) zwischen einem hinteren Bereich der drei Bereiche des Wärmetauschers und dem Verdichter (22, 24) vorgesehen ist.

2. Außeneinheit nach Anspruch 1, die ferner eine Steuerung (180) aufweist, die geeignet ist, die Drehgeschwindigkeit des Sauggebläses und die des Auslassgebläses so einzustellen, dass der nach oben strömende Luftstrom und der nach unten strömende Luftstrom unterschiedliche Geschwindigkeiten haben.

3. Außeneinheit nach Anspruch 1, die ferner eine Steuerung (180) aufweist, die geeignet ist, die Drehgeschwindigkeit des Sauggebläses und die des Auslassgebläses so einzustellen, dass der nach oben strömende Luftstrom und der nach unten strömende Luftstrom eine identische Geschwindigkeit haben.

4. Außeneinheit nach einem der Ansprüche 1 bis 3, wobei das Sauggebläse (198) geeignet ist, den nach oben strömenden Luftstrom in horizontaler Richtung zu erzeugen, und wobei das Auslassgebläse (148) geeignet ist, den nach unten strömenden Luftstrom in vertikaler Richtung zu erzeugen.

5. Außeneinheit nach Anspruch 1 bis 4, wobei die Mitte (160) der drei Seiten des Wärmetauschers weiter stromaufwärts im Luftstrom angeordnet ist als das Sauggebläse.

6. Außeneinheit nach Anspruch 1 bis 5, wobei der Kompressor (22, 24) weiter stromabwärts im Luftstrom angeordnet ist als das Sauggebläse.

## Revendications

1. Unité extérieure pour un climatiseur, comprenant :
une base (110) formant la surface inférieure de l'unité extérieure ;
une enceinte principale (100) raccordé à la base et comportant une pluralité de trous d'aspiration (123, 133, 163) permettant une admission d'air et un trou d'évacuation (143) permettant un refoulement d'air ;
un échangeur de chaleur (170) disposé à l'intérieur de l'enceinte principale et monté au sommet de la base, prévu pour effectuer un échange thermique avec l'air circulant dans l'unité extérieure ;
un ventilateur de refoulement (148) prévu sur le côté du trou d'évacuation de l'enceinte principale et pour générer un flux d'air descendant refoulé de unité extérieure ; et
un compresseur (22, 24) monté sur le sommet de la base pour comprimer un réfrigérant, l'enceinte principale ayant une forme de parallélépipède rectangle et la pluralité de trous d'aspiration étant formée sur trois faces latérales (120, 130, 160) respectives de l'enceinte principale,
le trou d'évacuation étant formé sur la surface supérieure (140) de l'enceinte principale, l'échangeur de chaleur (170) comprenant trois sections faisant face à la pluralité de trous d'aspiration,
**caractérisé en ce qu'**un ventilateur d'aspiration (198) est prévu sur le côté du trou d'aspiration de l'enceinte principale et pour générer un flux d'air ascendant pénétrant dans l'unité extérieure ;
le ventilateur d'aspiration (198) étant prévu dans la partie inférieure de l'enceinte principale et étant disposé au sommet de la base,
le ventilateur d'aspiration (198) étant prévu entre une section arrière des trois sections de l'échangeur de chaleur et le compresseur (22, 24).

2. Unité extérieure selon la revendication 1, comprenant en outre un contrôleur (180) prévu pour régler les vitesses de rotation du ventilateur d'aspiration et du ventilateur de refoulement de telle manière que le flux d'air ascendant et le flux d'air descendant ont des vitesses différentes.

3. Unité extérieure selon la revendication 1, comprenant en outre un contrôleur (180) prévu pour régler les vitesses de rotation du ventilateur d'aspiration et du ventilateur de refoulement, de telle manière que le flux d'air ascendant et le flux d'air descendant ont la même vitesse.

4. Unité extérieure selon l'une des revendications 1 à 3, où le ventilateur d'aspiration (198) est prévu pour générer le flux d'air ascendant dans la direction horizontale, et
où le ventilateur de refoulement (148) est prévu pour générer le flux d'air descendant dans la direction verticale.

5. Unité extérieure selon l'une des revendications 1 à 4 où la centrale (180) des trois faces latérales est disposée plus en amont due ventilateur d'aspiration dans le flux d'air.

6. Unité extérieure selon l'une de revendications 1 à 5, où le compresseur (22, 24) est arrangé plus en aval du ventilateur d'aspiration dans le flux d'air.
